# EUROPEAN PATENT APPLICATION

(11) **EP 3 968 643 A1**
(43) Date of publication of application: **16.03.2022**
(21) Application number: 20195680.2
(22) Date of filing: 11.09.2020
(51) Int. Cl.: H04N 21/218, H04N 21/422, H04N 21/4223, H04N 21/81

(54) **ALIGNMENT CONTROL INFORMATION FOR ALIGNING AUDIO AND VIDEO PLAYBACK**

(71) Applicant: Nokia Technologies Oy, 02610 Espoo (FI)
(72) Inventor: MATE, Sujeet Shyamsundar, 33720 Tampere (FI); LEHTINIEMI, Arto, 33880 Lempäälä (FI); VILERMO, Miikka, 37200 Siuro (FI)
(74) Representative: Kolster Oy Ab

(57) **Abstract**

An apparatus, method and computer program product for: receiving image information comprising a visual representation of a scene and audio information comprising at least one sound source, determining an axis of interest within the visual representation of the scene, the axis of interest being associated with the at least one sound source, determining, with respect to the axis of interest, an audio rendering axis associated with a first audio channel and a second audio channel, the first audio channel and the second audio channel comprising respective audio signals relating to the at least one sound source, determining a default rendering axis for the image information and the audio signals, and determining alignment control information for aligning the default rendering axis and the audio rendering axis.

## Description

### TECHNICAL FIELD

The present application relates generally to alignment control information. More specifically, the present application relates to determining alignment control information for controlling an orientation of a visual representation.

### BACKGROUND

The amount of multimedia content increases continuously. Users create and consume multimedia content, and it has a big role in modern society.

### SUMMARY

Various aspects of examples of the invention are set out in the claims. The scope of protection sought for various embodiments of the invention is set out by the independent claims. The examples and features, if any, described in this specification that do not fall under the scope of the independent claims are to be interpreted as examples useful for understanding various embodiments of the invention.

According to a first aspect of the invention, there is provided an apparatus comprising means for performing: receiving image information comprising a visual representation of a scene and audio information comprising at least one sound source, determining an axis of interest within the visual representation of the scene, the axis of interest being associated with the at least one sound source, determining, with respect to the axis of interest, an audio rendering axis associated with a first audio channel and a second audio channel, the first audio channel and the second audio channel comprising respective audio signals relating to the at least one sound source, determining a default rendering axis for the image information and the audio signals, and determining alignment control information for aligning the default rendering axis and the audio rendering axis.

According to a second aspect of the invention, there is provided a method comprising receiving image information comprising a visual representation of a scene and audio information comprising at least one sound source, determining an axis of interest within the visual representation of the scene, the axis of interest being associated with the at least one sound source, determining, with respect to the axis of interest, an audio rendering axis associated with a first audio channel and a second audio channel, the first audio channel and the second audio channel comprising respective audio signals relating to the at least one sound source, determining a default rendering axis for the image information and the audio signals, and determining alignment control information for aligning the default rendering axis and the audio rendering axis.

According to a third aspect of the invention, there is provided a computer program comprising instructions for causing an apparatus to perform at least the following: receiving image information comprising a visual representation of a scene and audio information comprising at least one sound source, determining an axis of interest within the visual representation of the scene, the axis of interest being associated with the at least one sound source, determining, with respect to the axis of interest, an audio rendering axis associated with a first audio channel and a second audio channel, the first audio channel and the second audio channel comprising respective audio signals relating to the at least one sound source, determining a default rendering axis for the image information and the audio signals, and determining alignment control information for aligning the default rendering axis and the audio rendering axis.

According to a fourth aspect of the invention, there is provided an apparatus comprising at least one processor and at least one memory including computer program code, the at least one memory and the computer program code configured to with the at least one processor, cause the apparatus at least to: receive image information comprising a visual representation of a scene and audio information comprising at least one sound source, determine an axis of interest within the visual representation of the scene, the axis of interest being associated with the at least one sound source, determine, with respect to the axis of interest, an audio rendering axis associated with a first audio channel and a second audio channel, the first audio channel and the second audio channel comprising respective audio signals relating to the at least one sound source, determine a default rendering axis for the image information and the audio signals, and determine alignment control information for aligning the default rendering axis and the audio rendering axis.

According to a fifth aspect of the invention, there is provided a non-transitory computer readable medium comprising program instructions for causing an apparatus to perform at least the following: receiving image information comprising a visual representation of a scene and audio information comprising at least one sound source, determining an axis of interest within the visual representation of the scene, the axis of interest being associated with the at least one sound source, determining, with respect to the axis of interest, an audio rendering axis associated with a first audio channel and a second audio channel, the first audio channel and the second audio channel comprising respective audio signals relating to the at least one sound source, determining a default rendering axis for the image information and the audio signals, and determining alignment control information for aligning the default rendering axis and the audio rendering axis.

According to a sixth aspect of the invention, there is provided a computer readable medium comprising program instructions for causing an apparatus to perform at least the following: receiving image information comprising a visual representation of a scene and audio information comprising at least one sound source, determining an axis of interest within the visual representation of the scene, the axis of interest being associated with the at least one sound source, determining, with respect to the axis of interest, an audio rendering axis associated with a first audio channel and a second audio channel, the first audio channel and the second audio channel comprising respective audio signals relating to the at least one sound source, determining a default rendering axis for the image information and the audio signals, and determining alignment control information for aligning the default rendering axis and the audio rendering axis.

### BRIEF DESCRIPTION OF THE DRAWINGS

Some example embodiments will now be described with reference to the accompanying drawings:
Figure 1 shows a block diagram of an example apparatus in which examples of the disclosed embodiments may be applied;
Figure 2 shows a block diagram of another example apparatus in which examples of the disclosed embodiments may be applied;
Figure 3 illustrates an example of image information provided by a media player;
Figure 4 illustrates another example of image information provided by a media player;
Figure 5 illustrates an example method; and
Figure 6 illustrates an example of defining an axis of interest, an audio rendering axis and alignment control information.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Example embodiments relate to an apparatus configured to receive image information comprising a visual representation of a scene and audio information comprising at least one sound source, determine an axis of interest within the visual representation of the scene, the axis of interest being associated with the at least one sound source, determine, with respect to the axis of interest, an audio rendering axis associated with a first audio channel and a second audio channel, the first audio channel and the second audio channel comprising respective audio signals relating to the at least one sound source, determine a default rendering axis for the image information and the audio signals, and determine alignment control information for aligning the default rendering axis and the audio rendering axis.

Omnidirectional cameras such as ceiling mounted security cameras are typically installed such that their position is optimized for monitoring a space without obstructions. An omnidirectional camera may capture images/video in a downwards direction, but the image/video may be viewed from an upright display. The image/video capture may also comprise capturing sound provided by a sound source. A change between the capturing direction and the viewing direction may cause challenges in audio rendering in terms of losing a semantically consistent connection between the captured image/video and captured sound.

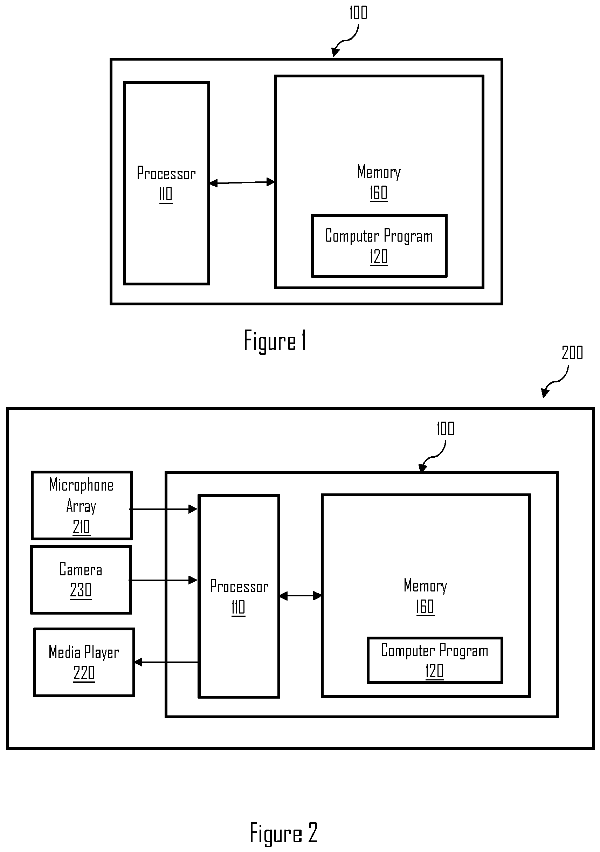

Figure 1 is a block diagram depicting an apparatus 100 operating in accordance with an example embodiment of the invention. The apparatus 100 may be, for example, an electronic device such as a chip or a chipset. The apparatus 100 comprises one or more control circuitry, such as at least one processor 110 and at least one memory 160, including one or more algorithms such as computer program code 120 wherein the at least one memory 160 and the computer program code are 120 configured, with the at least one processor 110 to cause the apparatus 100 to carry out any of example functionalities described below.

In the example of Figure 1, the processor 110 is a control unit operatively connected to read from and write to the memory 160. The processor 110 may also be configured to receive control signals received via an input interface and/or the processor 110 may be configured to output control signals via an output interface. In an example embodiment the processor 110 maybe configured to convert the received control signals into appropriate commands for controlling functionalities of the apparatus 100.

The at least one memory 160 stores computer program code 120 which when loaded into the processor 110 control the operation of the apparatus 100 as explained below. In other examples, the apparatus 100 may comprise more than one memory 160 or different kinds of storage devices.

Computer program code 120 for enabling implementations of example embodiments of the invention or a part of such computer program code may be loaded onto the apparatus 100 by the manufacturer of the apparatus 100, by a user of the apparatus 100, or by the apparatus 100 itself based on a download program, or the code can be pushed to the apparatus 100 by an external device. The computer program code 120 may arrive at the apparatus 100 via an electromagnetic carrier signal or be copied from a physical entity such as a computer program product, a memory device or a record medium such as a Compact Disc (CD), a Compact Disc Read-Only Memory (CD-ROM), a Digital Versatile Disk (DVD) or a Blu-ray disk.

Figure 2 is a block diagram depicting an apparatus 200 in accordance with an example embodiment of the invention. The apparatus 200 may be an electronic device such as a hand-portable device, a mobile phone or a Personal Digital Assistant (PDA), a Personal Computer (PC), a laptop, a desktop, a tablet computer, a wireless terminal, a communication terminal, a game console, a music player, an electronic book reader (e-book reader), a positioning device, a digital camera, a household appliance, a loudspeaker, a CD-, DVD or Blu-ray player, or a media player.

In the example embodiment of Figure 2, the apparatus 200 is illustrated as comprising the apparatus 100, a microphone array 210, a media player 220 and a camera 230. Instead of comprising a microphone array 210, a media player 220 and/or a camera 230, the apparatus 200 may be operatively connected to the microphone array 210, the media player 220 and/or the camera 230. For example, the apparatus 200 may be configured to communicate with the microphone array 210, the media player 220 and/or the camera 230 over a wireless radio connection, or the like.

The apparatus 200 may further comprise a display configured to act as a user interface. For example, the display may be a touch screen display. In an example embodiment, the display and/or the user interface may be external to the apparatus 200, but in communication with it.

The user interface may also comprise a manually operable control such as a button, a key, a touch pad, a joystick, a stylus, a pen, a roller, a rocker, a keypad, a keyboard or any suitable input mechanism for inputting and/or accessing information. Further examples include a camera, a speech recognition system, eye movement recognition system, acceleration-, tilt- and/or movement-based input systems. Therefore, the apparatus 200 may also comprise different kinds of sensors such as one or more gyro sensors, accelerometers, magnetometers, position sensors and/or tilt sensors.

According to an example embodiment, the apparatus 200 is configured to establish radio communication with at least one device using, for example, a Bluetooth, Wi-Fi, radio frequency identification (RFID), or a near field communication (NFC) connection.

The apparatus 200 may be configured to receive captured audio and captured visual information. The captured audio may comprise, for example, captured spatial audio and the visual information may comprise, for example, captured image information.

Spatial audio may comprise a full sphere surround-sound to mimic the way people perceive audio in real life. Spatial audio may comprise audio that appears from a user's position to be assigned to a certain direction and/or distance. Therefore, the perceived audio may change with the movement of the user or with the user turning. Spatial audio may comprise audio created by sound sources, ambient audio or a combination thereof. Ambient audio may comprise audio that might not be identifiable in terms of a sound source such as traffic humming, wind or waves, for example. The full sphere surround-sound may comprise a spatial audio field and the position of the user or the position of the capturing device may be considered as a reference point in the spatial audio field. According to an example embodiment, a reference point comprises the center of the audio field.

According to an example embodiment, the apparatus 200 is configured to communicate with the microphone array 210 configured to capture audio such as spatial audio. The apparatus 200 may comprise the microphone array 210 or be operatively connected to the microphone array 210. According to an example embodiment, the apparatus 200 is configured to receive audio information from the microphone array 210 or from a separate storage device such as a cloud server.

Image information may comprise, for example, omnidirectional image information such as omnidirectional video. Omnidirectional image information may comprise spherical image data that is mapped onto a two-dimensional plane. Omnidirectional image information may be captured by an omnidirectional camera that sees 360 degrees around the camera. For example, omnidirectional image information may be captured by a ceiling mounted camera.

According to an example embodiment, the apparatus 200 is configured to communicate with the camera 230 configured to capture image information. The camera 230 may comprise, for example, an omnidirectional camera. The apparatus 200 may comprise the camera 230 or be operatively connected to the camera 230. According to an example embodiment, the camera 230 is configured to capture image information in substantially 360 degrees around the camera 230. According to an example embodiment, the apparatus 200 is configured to receive captured image information from the camera 230 or from a separate storage device such as a cloud server.

According to an example embodiment, the apparatus 200 is configured to receive information relating to the captured audio and/or image information. Information relating to the captured audio may comprise information relating to capture and/or playback of audio information. Information relating to captured image information may comprise information relating to capture and/or playback of image information. The apparatus 200 may be configured to receive information relating to the captured audio and/or image information from a separate device or the apparatus 200 may be configured to determine information relating to the captured audio and/or image information based on information associated with one or more captured audio files and/or one or more captured image files, respectively. Information associated with one or more captured audio files and/or one or more image files may comprise, for example, metadata.

Information relating to captured audio may comprise information relating to capturing and/or rendering audio information and information relating to captured image information may comprise information relating to capturing and/or rendering image information. For example, the apparatus 200 may be configured to receive information on one or more audio channels in an audio file and/or an orientation of image information provided for display. Information relating to captured audio and/or image information may be included in a file comprising the captured audio information and/or image information. Information included in a file may comprise, for example, metadata.

According to an example embodiment, information relating to captured audio and/or image information comprises information relating to captured audio signals and/or information relating to captured image information, respectively. The apparatus 200 may be configured to receive information relating to captured audio signals from a separate device or the apparatus 200 may be configured to capture the audio signals and determine the information relating to the captured audio signal based on the captured audio signals. Similarly, the apparatus 200 may be configured to receive information relating to captured image information from a separate device or the apparatus 200 may be configured to capture the image information and determine the information relating to the captured image information based on the captured image information. The apparatus 200 may be configured to determine the information relating to the captured audio signals based on data such as metadata associated with the captured audio signals or based on characteristics of the captured audio signals. Similarly, the apparatus 200 may be configured to determine the information relating to the captured image information based on data such as metadata associated with the captured image information or based on characteristics of the captured image information.

According to an example embodiment, captured audio signals comprise at least a first audio channel and a second audio channel. An audio channel comprises a stream of recorded sound with an associated location and/or direction in a sound field. An associated location/direction in a sound field may indicate a particular location/direction of an audio channel in the sound field with respect to a reference point. The reference point may comprise, for example, a position of an audio capturing device.

An associated direction in a sound field may indicate a particular direction of an audio channel in the sound field with respect to a reference point. For example, a first audio channel may be associated with a left side of a sound field and a second audio channel may be associated with a right side of the sound field. The associated location/direction of an audio channel in a sound field may be used upon rendering the audio channel by providing a spatial audio field comprising a reproduction of the sound field such that the location/direction of the audio channel in the sound field corresponds to the location of the audio channel in the spatial audio field.

A first audio channel may be captured by a first microphone and a second audio channel may be captured by a second microphone. Alternatively, the first audio channel and the second audio channel may be captured by a single microphone comprising a first microphone unit and a second microphone unit.

According to an example embodiment, the apparatus 200 is configured to receive image information comprising a visual representation of a part of a scene and audio information comprising at least one sound source. A visual representation of a scene may comprise, for example, a visual representation of a space or a portion of a space. A space may comprise, for example a room, a shop, a garage, a park, or the like.

The image information may comprise one or more image or video frames. According to an example embodiment, the image information comprises an omnidirectional image or video. According to another example embodiment, the image information comprises a portion of an omnidirectional image or video. An omnidirectional image or video may comprise, for example, a fisheye image or a fisheye video. An omnidirectional video may comprise a 360 degrees video supporting three degrees of freedom. An omnidirectional video may comprise or be associated with spatial audio.

The at least one sound source may comprise an object producing sound. The at least one sound source may comprise a living object such as a human being or an animal, or an inanimate object such as a car. A sound source may further comprise a moving sound source or a stationary sound source.

According to an example embodiment, the apparatus 200 is configured to determine an axis of interest within the visual representation of the scene, the axis of interest being associated with the at least one sound source.

An axis of interest may comprise an axis within the visual representation of the scene that is a desired observation axis for observing the at least one sound source in one or more positions. In case the visual representation of the scene comprises a plurality of axes, the axis of interest may comprise an axis of a particular interest. For example, an axis of interest may comprise at least a portion of a corridor in a shop or a path the sound source is configured to follow. According to an example embodiment, the axis of interest comprises an axis corresponding to at least a portion a physical path identified in the visual information.

According to an example embodiment, an axis of interest comprises an axis extending between a first point of interest and a second point of interest. The first point of interest and the second point of interest may comprise, for example, potential locations for the at least one sound source.

According to an example embodiment, determining the axis of interest comprises analyzing the image information. Analyzing image information may comprise, for example, extracting information from one or more images using digital image processing techniques.

According to an example embodiment, the apparatus 200 is configured to determine the axis of interest dynamically. For example, the apparatus 200 may be configured to determine the axis of interest in response to detecting a change in the position of the at least one sound source or in response to detecting that the at least one sound source deviates from a previously determined axis of interest. For example, assuming the image information comprises a sound source that is a car driving on a road and the road turns, the apparatus 200 may be configured to determine or update an axis of interest in response to the car turning.

According to an example embodiment, the axis of interest comprises a virtual axis. A virtual axis may comprise an axis that lacks a physical structure. A virtual axis may be invisible or visualized for a user.

Without limiting the scope of the claims, an advantage of determining an axis of interest within a visual representation of a scene is that an axis of interest may be used for directing content capture to relevant directions thereby improving the quality of captured content.

According to an example embodiment, the apparatus 200 is configured to determine, with respect to the axis of interest, an audio rendering axis associated with a first audio channel and a second audio channel, the first audio channel and the second audio channel comprising respective audio signals relating to the at least one sound source.

According to an example embodiment, the first audio channel comprises audio signals relating to a first sound source and the second audio channel comprises audio signals relating to a second sound source. The first sound source may comprise, for example, a first person and the second sound source may comprise, for example, a second person.

According to an example embodiment, the first audio channel comprises a left audio channel and the second audio channel comprises a right audio channel. According to another example embodiment, the first audio channel comprises a right audio channel and the second audio channel comprises a left audio channel. The apparatus 200 may be configured to provide the first audio channel for output via a first loudspeaker and the second audio channel for output via a second loudspeaker.

An audio rendering axis may comprise an axis in a sound field such as a yaw axis, a pitch axis, or a roll axis. The audio rendering axis may comprise, for example, a diagonal axis, an axis perpendicular or parallel to the axis of interest, or the like.

According to an example embodiment, the audio rendering axis comprises an axis orthogonal to the axis of interest.

According to an example embodiment, the audio rendering axis divides the spatial audio field into a first part and a second part. For example, the audio rendering axis may divide the spatial audio field into a left side and a right side. Dividing spatial audio field may comprise dividing the spatial audio field for capturing audio and/or for rendering captured audio signals. Dividing the spatial audio field for capturing audio may comprise, for example, assigning one or more microphones for capturing audio in a specified direction of a sound field.

According to an example embodiment, the apparatus 200 is configured to assign one or more microphones for capturing audio on a first side of the audio rendering axis and one or more microphones for capturing audio on a second side of the audio rendering axis. According to an example embodiment, the first side of the audio rendering axis comprises a first direction and the second side of the audio rendering axis comprises a second direction.

Assigning one or more microphones to capture audio in a particular direction may comprise performing beamforming. The apparatus 200 may be configured to form an audio beam by selecting a particular microphone arrangement for capturing audio from a first direction and/or attenuating sounds coming from a second direction and processing the received audio. In other words, a microphone array may be used to form a spatial filter which is configured to extract a signal from a specific direction and/or reduce contamination of signals from other directions.

According to an example embodiment, the apparatus 200 is configured to perform beamforming based on the audio rendering axis. The apparatus 200 may be configured to form a first audio beam in a first direction using microphones on a first side on the audio rendering axis and/or a second audio beam in a second direction using microphones on a second side of the audio rendering axis.

Similarly to dividing the spatial audio field for capturing audio, the audio rendering axis may be used for dividing the spatial audio field for rendering audio.

According to an example embodiment, the apparatus 200 is configured to assign one or more loudspeakers for rendering audio on a first side of the audio rendering axis and one or more loudspeakers for rendering audio on a second side of the audio rendering axis. For example, the apparatus 200 may be configured to assign one or more loudspeakers located on the left side of the auxiliary axis to output audio captured on the left and one or more loudspeakers located on the right side of the auxiliary axis to output audio captured on the right.

According to an example embodiment, the audio rendering axis comprises an axis between a position of the first loudspeaker and a position of the second loudspeaker. A position of a loudspeaker may comprise a physical position of the loudspeaker with respect to an image output device and/or a position of a virtual loudspeaker. Providing a virtual loudspeaker may comprise creating an impression of a loudspeaker positioned at a defined location. Providing a virtual loudspeaker may comprise processing audio channels through filters that simulate a sonic signature of a loudspeaker at a defined location within a space.

According to an example embodiment, the audio rendering axis comprises a virtual axis. A virtual axis may comprise an axis that lacks a physical structure. A virtual axis may be invisible or visualized for a user.

Without limiting the scope of the claims, an advantage of determining an audio rendering axis with respect to the axis of interest is that a connection between the image information and the audio information may be created thereby enabling provision of a semantically consistent experience of audio-visual content for a user.

According to an example embodiment, the apparatus 200 is configured to determine an orientation of the visual representation of the scene. Orientation of the visual representation may comprise an orientation of an image or video frame of the image information. Orientation of an image or video frame may comprise an orientation defined in metadata associated with the image or video frame.

According to an example embodiment, the apparatus 200 is configured to determine a default rendering axis for the image information and the audio signals. The default rendering axis may define how the image information is rendered on a display and how the audio signals are rendered using one or more loudspeakers by default. For example, the default rendering axis may correspond to a top-down axis for rendering image information on a display and/or a front-back axis for rendering captured audio using one or more loudspeakers. The apparatus 200 may be configured to determine the default rendering axis based on the determined orientation of the visual representation of the scene. The apparatus 200 may be configured to compare the orientation of the default rendering axis with an orientation of the audio rendering axis. The apparatus 200 may further be configured to determine a difference between the orientation of the default rendering axis and the orientation of the audio rendering axis.

According to an example embodiment, the apparatus 200 is configured to determine alignment control information for aligning the default rendering axis and the audio rendering axis.

Alignment control information may comprise one or more parameter values that may be used for controlling the orientation of the audio rendering axis with respect to the default rendering axis, the orientation of the default rendering axis with respect to the audio rendering axis, or both the audio rendering axis and the default rendering axis.

Alignment control information may comprise one or more parameter values indicating a target orientation of the default rendering axis, the audio rendering axis or both the default rendering axis and the audio rendering axis. As another example, alignment control information may comprise one or more parameter values indicating how much the orientation of the default rendering axis, the audio rendering axis or both the default rendering axis and the audio rendering axis should be changed for aligning the default rendering axis and the audio rendering axis.

According to an example embodiment, the alignment control information comprises information for changing the orientation of the default rendering axis.

Changing the orientation of the default rendering axis such that it is aligned with the audio rendering axis comprises rotating the spatial audio field. Rotating the spatial audio field comprises modifying one or more audio parameters such that the orientation of the spatial audio field with respect to a reference point is changed.

Modifying one or more audio parameters may be performed in different manners for different formats of audio. For example, rotatable audio may be rotated by modifying metadata and ambisonics may be rotated by modifying rotation matrices.

According to an example embodiment, the alignment control information comprises information for changing the orientation of audio rendering axis.

Changing the orientation of the audio rendering axis such that it is aligned with the default rendering axis comprises rotating the image information. Rotating the image information comprises modifying one or more image parameters such as metadata associated with the image information.

According to an example embodiment, the alignment control information comprises an angle between the default rendering axis and the audio rendering axis, and a direction of rotation.

The apparatus 200 may be configured to determine alignment control information for a portion of the image information such as one or more image or video frames.

Without limiting the scope of the claims, an advantage of determining alignment control information is that the alignment control information may be used for placing objects of interest to substantially align with loudspeakers thereby enabling intuitive association of audio and image data and improved separation of sounds from different sound sources.

A video captured by a fisheye lens may be dewarped. Dewarping comprises correcting distortion of images obtained from a camera equipped with a fisheye lens to obtain an image with straightened lines and with objects that look natural. In such a case, it may be useful to determine the alignment control information for a portion of the visual representation of the scene. According to an example embodiment, the apparatus 200 is configured to determine the alignment control information for a part of the image information.

According to an example embodiment, the apparatus 200 is configured to determine the alignment control information for a first image frame and a second image frame. According to an example embodiment, the first image frame is different from the second image frame.

The apparatus 200 may be configured to determine the alignment control information in response to receiving information of a change in the orientation of the axis of interest.

The apparatus 200 may be configured to provide the alignment control information for a media player as a separate piece of information or associated with the image information, or the alignment control information may be derived by the media player. According to an example embodiment, the apparatus 200 is configured to associate the alignment control information with a file comprising the received image information.

According to an example embodiment, the apparatus 200 is configured to provide the alignment control information to a media player configured to render the audio information and the image information.

According to an example embodiment, the apparatus 200 is configured to change the orientation of the default rendering axis and/or the audio rendering axis based on the alignment control information.

According to an example embodiment, the apparatus 200 comprises means for performing the features of the claimed invention, wherein the means for performing comprises at least one processor 110, at least one memory 160 including computer program code 120, the at least one memory 160 and the computer program code 120 configured to, with the at least one processor 110, cause the performance of the apparatus 200. The means for performing the features of the claimed invention may comprise means for receiving image information comprising a visual representation of a scene and audio information comprising at least one sound source, means for determining an axis of interest within the visual representation of the scene, the axis of interest being associated with the at least one sound source, means for determining, with respect to the axis of interest, an audio rendering axis associated with a first audio channel and a second audio channel, the first audio channel and the second audio channel comprising respective audio signals relating to the at least one sound source, means for determining a default rendering axis for the image information and the audio signals, and means for determining alignment control information for aligning the default rendering axis and the audio rendering axis.

The apparatus 200 may further comprise means for determining the alignment control information for a first image frame and a second image frame or means for determining the alignment control information for a part of the image information. The apparatus 200 may further comprise means for associating the alignment control information with a file comprising the received image information and/or means for providing the alignment control information to a media player configured to render the audio information and the image information.

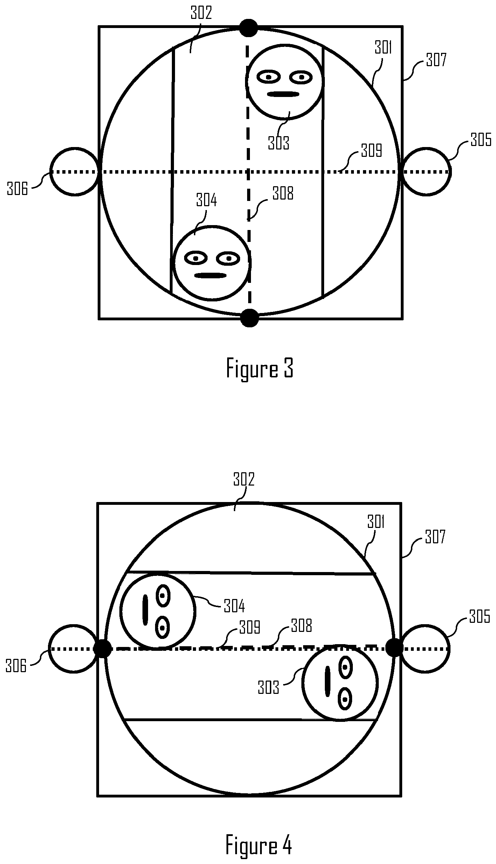

Figure 3 illustrates an example of spherical image information 301 provided by a media player for displaying on a display 307. The spherical image information 301 comprises a visual representation of a scene comprising a first sound source 303 and a second sound source 304. The first sound source 303 comprises a first person and the second sound source 304 comprises a second person. The display 307 is operatively connected to a first loudspeaker 305 and a second loudspeaker 306 for outputting audio signals of a first audio channel and a second audio channel, respectively. The first audio channel and the second audio channel comprise audio signals relating to the first sound source and the second sound source, respectively. In the example of Figure 3, the scene comprises an aisle 302 in a shop were the two persons are located.

The apparatus 200 is configured to determine an axis of interest 308 within the visual representation of the scene. In the example of Figure 3, the axis of interest 308 comprises the aisle 302. The axis of interest 308 is illustrated by the dashed line in Figure 3.

The apparatus 200 is further configured to determine, with respect to the axis of interest 308, an audio rendering axis 309. In the example of Figure 3, the audio rendering axis 309 comprises an axis orthogonal to the axis of interest 308. In the example of Figure 3, the audio rendering axis 309 is illustrated by the dotted line.

In the example of Figure 3, the axis of interest 308 also comprises a default rendering axis for rendering the spherical image information and audio signals. The apparatus 200 is further configured to determine alignment control information for aligning the default rendering axis and the audio rendering axis 309.

Figure 4 illustrates an example of spherical image information 301 provided by a media player for displaying on a display 307 such that an orientation of the visual representation of the scene is controlled based on alignment control information determined by the apparatus 200.

Similarly to the example of Figure 3, the spherical image information 301 comprises a visual representation of a scene comprising a first sound source 303 and a second sound source 304. The scene comprises an aisle 302 in a shop were the two sound sources are located.

In the example of Figure 4, the orientation of the spherical image information is controlled such that the orientations of the axis of interest 308 and the audio rendering axis 309 are aligned.

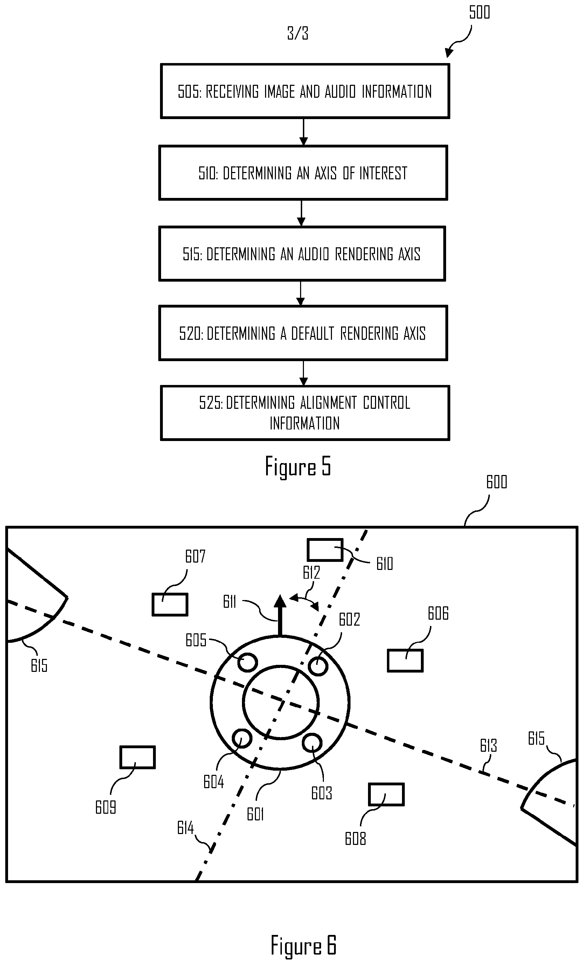

Figure 5 illustrates an example method 500 incorporating aspects of the previously disclosed embodiments. More specifically the example method 500 illustrates determining alignment control information. The method may be performed by the apparatus 200.

The method starts with receiving 505 image information comprising a visual representation of a scene and audio information comprising at least one sound source. The image information may comprise one or more image or video frames.

The method continues with determining 510 an axis of interest within the visual representation of the scene, the axis of interest being associated with the at least one sound source.

An axis of interest may comprise an axis within the visual representation of the scene that is a desired observation axis for observing the at least one sound source in one or more positions.

The method continues with determining 515, with respect to the axis of interest, an audio rendering axis associated with a first audio channel and a second audio channel, the first audio channel and the second audio channel comprising audio signals relating to the at least one sound source. The at least one sound source may comprise an object producing sound. The at least one sound source may comprise a living object such as a human being or an animal, or an inanimate object such as a car.

The method further continues with determining 520 a default rendering axis for the image information and the audio signals.

The method further continues with determining 525 alignment control information for aligning the default rendering axis and the audio rendering axis.

Alignment control information may be determined for a portion of the image information such as one or more image or video frames.

Figure 6 illustrates an example of determining an axis of interest, an audio rendering axis and alignment control information. More specifically the example of Figure 6 illustrates determining alignment control information for aligning playback of captured image/video information and audio information in order to provide a semantically consistent connection between the captured image/video and captured audio for a user during playback. The axis of interest, an audio rendering axis and alignment control information may be determined by the apparatus 200.

In the example of Figure 6, a visual representation of a scene 600 comprises a space such as a room, comprising two doors 615 at opposite sides of the space. The visual representation of the scene 600 is captured by an omnidirectional camera 601 installed in the ceiling of the room. It should be noted that the omnidirectional camera 601 is not, in this example, visible in the visual representation of the scene 600, but presented for illustration purposes in the example of Figure 6.

The omnidirectional camera 601 comprises a plurality of microphones 602, 603, 604 and 605 that are configured to capture audio in the space. A plurality of loudspeakers 607, 608, 609 and 610 may be configured for outputting audio captured by the plurality of microphones.

The apparatus 200 is configured to determine an axis of interest 613 within the visual representation of the scene 600 by performing, for example, image analysis. In the example of Figure 6, the axis of interest 613 is determined to be a virtual axis extending between the two doors 615, because the axis of interest is considered as a potential location for one or more sound sources in the room. A sound source may comprise, for example, a human being speaking in the room.

The apparatus 200 is further configured to determine, with respect to the axis of interest, an audio rendering axis 614. In the example of Figure 6, the audio rendering axis 614 is orthogonal to the axis of interest 613 and divides the space into a first part and a second part.

The audio rendering axis may be used for selecting and/or combining microphone signals from a plurality of microphones.

The apparatus 200 may be configured to associate a plurality of microphones with the first part and the second part based on the audio rendering axis 614. The first part may be associated with a first audio channel and the second part may be associated with a second audio channel. For example, microphones 604 and 605 may be associated with a left audio channel and microphones 602 and 603 may be associated with a right audio channel.

The apparatus 200 may further be configured to perform audio beamforming for capturing audio based on the audio rendering axis 614. For example, the apparatus 200 may be configured to provide a first audio beam using microphones associated with a first side of the audio rendering axis 614 and a second audio beam using microphones associated with a second side of the audio rendering axis 614. For example, the apparatus 200 may be configured to provide a first audio beam using microphones 604 and 605 for capturing audio on the left side of the audio rendering axis 614 and a second audio beam using microphones 602 and 603 for capturing audio on the right side of the audio rendering axis.

The axis of interest 613 may be used for controlling a direction of an audio beam. The apparatus 200 may be configured to control a direction of an audio beam based on the axis of interest 613 such that the direction of an audio beam is substantially aligned with the axis of interest 613. For example, the apparatus 200 may be configured to direct a direction of an audio beam formed by microphones 604 and 605 and an audio beam formed by microphones 602 and 603 such that the directions of the audio beams are substantially aligned with the axis of interest 613.

Similarly to a plurality of microphones, the audio rendering axis 614 may be used for selecting and/or combining one or more loudspeakers for audio channel output.

The apparatus 200 may be configured to associate a plurality of loudspeakers with the first part and the second part based on the audio rendering axis 614. The first part may be configured for a first audio channel output and the second part may be associated with a second audio channel output. For example, loudspeakers 607 and 609 may be configured for a left audio channel output and loudspeakers 606 and 608 may be configured for a right audio channel output.

In the example of Figure 6, the visual representation of the scene 600 is associated with a default rendering axis 611 indicated with arrow. The default rendering axis 611 comprises a default image/video rendering orientation and a default audio rendering orientation.

The apparatus 200 is configured to determine alignment control information for controlling an orientation of the visual representation of the scene 600. The alignment control information comprises a difference between the default rendering axis 611 and the audio rendering axis 614 indicated by arrow 612. The alignment control information indicates how much the orientation of the visual representation of the scene 600 should be changed from the default rendering axis 611 in order to provide a semantically consistent connection between the captured image/video and audio during playback.

The alignment control information comprises one or more parameters for aligning a default rendering axis 611 and the audio rendering axis 613. Aligning the default rendering axis 611 and the audio rendering axis 613 may comprise rotating the visual representation of the scene 600 or rotating the spatial audio field. A spatial audio field may be rotated by changing metadata associated with the audio information or by modifying rotation matrices.

Without limiting the scope of the claims, an advantage of determining alignment control information is that using the alignment control information for controlling the orientation of the image information with respect to the orientation of the audio information or for controlling the orientation of the audio information with respect to the orientation of the image information enables intuitive association of audio and image data thereby providing a semantically consistent experience of audio-visual content may be provided for a user.

Without in any way limiting the scope, interpretation, or application of the claims appearing below, a technical effect of one or more of the example embodiments disclosed herein is that directions of sound sources may be mapped to a camera image such that the sounds produced by sound sources may be distinguished from each other when played back.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer-readable medium' may be any media or means that can contain, store, communicate, propagate or transport the instructions for use by or in connection with an instruction execution system, apparatus, or device, such as a computer, with one example of a computer described and depicted in FIGURE 2. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It will be obvious to a person skilled in the art that, as the technology advances, the inventive concept can be implemented in various ways. The invention and its embodiments are not limited to the examples described above but may vary within the scope of the claims.

## Claims

1. An apparatus comprising means for:
receiving image information comprising a visual representation of a scene and audio information comprising at least one sound source;
determining an axis of interest within the visual representation of the scene, the axis of interest being associated with the at least one sound source;
determining, with respect to the axis of interest, an audio rendering axis associated with a first audio channel and a second audio channel, the first audio channel and the second audio channel comprising respective audio signals relating to the at least one sound source;
determining a default rendering axis for the image information and the audio signals; and
determining alignment control information for aligning the default rendering axis and the audio rendering axis.

2. The apparatus according to claim 1, wherein the alignment control information comprises information for changing the orientation of the default rendering axis.

3. The apparatus according to claim 1, wherein the alignment control information comprises information for changing the orientation of the audio rendering axis.

4. The apparatus according to any preceding claim, wherein the alignment control information comprises an angle between the default rendering axis and the audio rendering axis, and a direction of rotation.

5. The apparatus according to any preceding claim, wherein the audio rendering axis and the axis of interest comprise a virtual axis.

6. The apparatus according to any preceding claim, wherein the audio rendering axis comprises an axis orthogonal to the axis of interest.

7. The apparatus according to any preceding claim, wherein determining the axis of interest comprises analyzing at least a portion of the image information.

8. The apparatus according to any preceding claim, wherein the apparatus comprises means for determining the alignment control information for a first image frame and a second image frame.

9. The apparatus according to any preceding claim, wherein the apparatus comprises means for determining the alignment control information for a part of the image information.

10. The apparatus according to any preceding claim, wherein the image information comprises an omnidirectional image or video.

11. The apparatus according to any preceding claim, wherein the first audio channel comprises a left audio channel and the second audio channel comprises a right audio channel.

12. The apparatus according to any preceding claim, wherein the apparatus comprises means for associating the alignment control information with a file comprising the image information or the audio signals.

13. The apparatus according to any preceding claim, wherein the apparatus comprises means for providing the alignment control information to a media player configured to render the audio signals and the image information.

14. A method comprising:
receiving image information comprising a visual representation of a scene and audio information comprising at least one sound source;
determining an axis of interest within the visual representation of the scene, the axis of interest being associated with the at least one sound source;
determining, with respect to the axis of interest, an audio rendering axis associated with a first audio channel and a second audio channel, the first audio channel and the second audio channel comprising respective audio signals relating to the at least one sound source;
determining a default rendering axis for the image information and the audio signals; and
determining alignment control information for aligning the default rendering axis and the audio rendering axis.

15. A computer readable medium comprising instructions for causing an apparatus to perform at least the following:
receiving image information comprising a visual representation of a scene and audio information comprising at least one sound source;
determining an axis of interest within the visual representation of the scene, the axis of interest being associated with the at least one sound source;
determining, with respect to the axis of interest, an audio rendering axis associated with a first audio channel and a second audio channel, the first audio channel and the second audio channel comprising respective audio signals relating to the at least one sound source;
determining a default rendering axis for the image information and the audio signals; and
determining alignment control information for aligning the default rendering axis and the audio rendering axis.
